# EUROPEAN PATENT SPECIFICATION

(11) **EP 4 093 599 B1**
(45) Date of publication and mention of the grant of the patent: **29.11.2023**
(21) Application number: 21712335.5
(22) Date of filing: 22.02.2021
(51) Int. Cl.: B29C 64/124, B29C 64/255, B29C 64/307, B33Y 10/00, B33Y 30/00, B33Y 40/00, B33Y 70/00, C08G 61/08

(54) **METHODS OF MAKING A THREE-DIMENSIONAL OBJECT**
VERFAHREN ZUR HERSTELLUNG EINES DREIDIMENSIONALEN OBJEKTS
PROCÉDÉS DE FABRICATION D'UN OBJET TRIDIMENSIONNEL

(30) Priority: 28.02.2020 US 202062982843 P; 07.04.2020 US 202063006443 P
(43) Date of publication of application: 30.11.2022
(73) Proprietor: Carbon, Inc., Redwood City, California 94063 (US)
(72) Inventor: POELMA, Justin, Sunnyvale, California 94085 (US); FELLER, Bob E., San Mateo, California 94401 (US)
(74) Representative: Marks & Clerk LLP
(86) International application number: PCT/US2021/019056
(87) International publication number: WO 2021/173493

(56) References cited:
- US-A1- 2013 292 862
- US-A1- 2018 304 526
- US-A1- 2019 048 217
- US-A1- 2019 090 984
- US-A1- 2020 061 919

## Description

### Field of the Disclosure

The present disclosure concerns methods and apparatus for producing objects by additive manufacturing.

### Background of the Disclosure

A group of additive manufacturing techniques sometimes referred to as "stereolithography" creates a three-dimensional object by the sequential polymerization of a light polymerizable resin. Such techniques may be "bottom-up" techniques, where light is projected into the resin on the bottom of the growing object through a light transmissive window, or "top-down" techniques, where light is projected onto the resin on top of the growing object, which is then immersed downward into the pool of resin.

The recent introduction of a more rapid stereolithography technique known as continuous liquid interface production (CLIP), coupled with the introduction of "dual cure" resins for additive manufacturing, has expanded the usefulness of stereolithography from prototyping to manufacturing (*see, e.g.,* US Patent Nos. 9,211,678; 9,205,601; and 9,216,546 to DeSimone et al.; and also J. Tumbleston, D. Shirvanyants, N. Ermoshkin et al., Continuous liquid interface production of 3D Objects, Science 347, 1349-1352 (2015); *see also* Rolland et al., US Patent Nos. 9,676,963, 9,453,142 and 9,598,606).

US2020/061919A1 describes a window cassette for a bottom-up additive manufacturing apparatus. The window cassette includes an optically transparent semipermeable member, on which the semipermeable member a three-dimensional object can be produced, a frame surrounding and connected to the semipermeable member, and a fluid supply bed in or adjacent the semipermeable member and configured to feed a polymerization inhibitor through the semipermeable member. The fluid supply bed has at least two opposing sides and includes a first channel array having an inlet orifice and an outlet orifice and a second channel array interdigitated with but separate from the first channel array, and the second channel array having an inlet orifice and an outlet orifice. An apparatus for producing a three-dimensional object by additive manufacturing utilizing a window cassette is also described.
US2019090984A1 relates to a dental appliance made of an olefin polymer that is directly formed via rapid prototyping without the use of an intermediary physical mold. A polymer precursor solution includes one or more olefin-containing monomers and/or oligomers, an olefin polymerization catalyst, and a UV absorbing agent to limit penetration of the UV light through the polymer precursor solution. One or more reactions of the polymer precursor solution are modulated in response to UV light, and the polymer precursor solution may further include an inhibitor (quenching agent) configured to modulate those reactions. The polymer precursor solution can be deposited using UV-cured stereolithographic or 3D printing methods to form appliances exhibiting improved elongation at break characteristics and suitable stress resistance.

Additional additive manufacturing techniques may further expand the variety of materials suitable for stereolithography.

### Summary of the Disclosure

Aspects of the present invention are set out in the appended claims.

Provided herein according to claim 1 is a method of making a three-dimensional object by bottom-up additive manufacturing, which method may include: providing a carrier platform, a light source, and a light transmissive window therebetween, the light transmissive window comprising a gas permeable member having a top surface and a bottom surface; depositing a liquid resin on the window, the resin comprising a cyclic olefin monomer and a ring-opening metathesis polymerization (ROMP) photocatalyst; contacting a gas to said gas permeable member bottom surface; and exposing said resin to light from said light source while advancing said carrier platform away from said window to form said three-dimensional object on said carrier platform.

The activation of the ROMP photocatalyst for the polymerization of said cyclic olefin monomer is inhibited by oxygen.

As discussed further below, the gas contains oxygen, but at a low level. The oxygen is included in an amount sufficient to reduce stray cure, skirt formation, or flaring around the growing three-dimensional object (which increases failure rates), but in an amount insufficient to inhibit activation of the ROMP photocatalyst in the resin to an extent that prevents the formation of the three-dimensional object. In the claimed method, the oxygen included at a partial pressure in a range of 0.1 to 11 kilopascals. In some embodiments, the contacting of the gas to said gas permeable member bottom surface is at a pressure less than the pressure of ambient air.

In some embodiments, the liquid resin deposited on said window is in contact with ambient air, while in other embodiments the liquid resin deposited on the window is in contact with a controlled atmosphere (or second gas) containing low levels of oxygen (e.g., oxygen at a level substantially the same as included in the gas in contact with the gas permeable member bottom surface, such as by providing the window in an enclosed chamber containing air at reduced pressure).

In some embodiments, a liquid interface is maintained between said object and said window by said resin during the exposing step.

In some embodiments, the gas comprises an inert gas such as nitrogen, argon, helium, neon, krypton, xenon, radon, or a combination of two or more thereof. In some embodiments, the gas comprises argon.

In some embodiments, the gas is dissolved in a liquid carrier.

In some embodiments, the cyclic olefin monomer is selected from the group consisting of cyclopropene, cyclobutene, benzocyclobutene, cyclopentene, norbornene, norbornadiene, cycloheptene, cyclooctene, 7-oxanorbornene, 7-oxanorbornadiene, cyclodecene, 1,3-cyclooctadiene, 1,5-cyclooctadiene, 1,3-cycloheptadiene, [2.2.1]bicycloheptenes, [2.2.2]bicyclooctenes, ethylidene norbornene, dicyclopentadiene, vinyl norbornene, cyclohexenylnorbornenes, norbornene dicarboxylic anhydrides, cyclododecene, 1,5,9-cyclododecatriene, and a mixture of two or more thereof.

In some embodiments, the ROMP photocatalyst comprises a transition metal catalyst. In some embodiments, the ROMP photocatalyst comprises ruthenium, tungsten, or osmium.

In some embodiments, the resin further comprises at least one additional constituent selected from the group consisting of photoabsorbers, pigments, dyes, matting agents, flame-retardants, fillers, non-reactive and light-reactive diluents, and combinations of two or more thereof.

In some embodiments, the resin further comprises a latent thermal ROMP catalyst, and said method further comprises heating said object after forming thereof to further polymerize said resin.

Also described in the present disclosure is an apparatus for additively manufacturing an object from a light polymerizable resin, the resin comprising a cyclic olefin monomer and a ring-opening metathesis polymerization (ROMP) photocatalyst, the apparatus including: (a) a light transmissive window, wherein said window comprises (i) a gas permeable top member on which a light polymerizable resin can be placed, *(ii)* a rigid lower member, and *(iii)* a gas supply region positioned between said top member and said bottom member; (b) a carrier platform positioned above said window, on which an object can be produced from the resin; (c) a drive operatively associated with said carrier platform and said light transmissive window, the drive configured for advancing said carrier platform and said window away from one another; (d) a light source positioned beneath said window and configured to polymerize the light polymerizable resin; and (e) an inert gas supply operatively associated with said window gas supply region configured for *(i)* supplying inert gas through said top member to said resin, and *(ii)* receiving oxygen through said top member from said resin.

In some examples, the inert gas supply comprises a nitrogen generator or a nitrogen supply.

In some examples, the inert gas supply comprises an argon supply.

In some examples, the inert gas supply comprises a bottled gas blend.

In some examples, the inert gas supply is configured for contacting said inert gas to said gas permeable member bottom surface at a pressure less than ambient air pressure *(i.e.,* by inclusion of a vacuum pump operatively associated with said gas supply).

According to the invention, the inert gas supply is configured to include oxygen in an amount sufficient to reduce stray cure, skirt formation, or flaring around the growing three-dimensional object (which increases failure rates in the process), but in an amount insufficient to inhibit activation of the ROMP photocatalyst in the resin to an extent that prevents the formation of the three-dimensional object: the oxygen is included in the gas at a partial pressure in a range of 0.1 to 11 kilopascals.

In some examples, the window is configured for contact to oxygen in ambient air (*i.e.,* is in a chamber open to ambient air and/or is in contact with ambient air).

In some examples, the apparatus further comprises: (f) an enclosed chamber containing said window, and (g) a gas supply operatively associated with said enclosed chamber, the gas supply configured for supplying gas into said chamber, the gas including oxygen at a partial pressure substantially the same as said gas supplied to said window (*e.g*., ambient air at reduced pressure).

In some examples, the apparatus further includes a liquid carrier in which said inert gas is dissolved.

Further described in the present disclosure is a method of recycling an additively manufactured object, the object comprised of the photopolymerization product of cyclic olefin monomer, comprising: optionally comminuting the object, and then contacting the optionally comminuted object to a liquid acrylate (*e.g*., acrylic acid, ethyl acrylate) in the presence of a Grubbs catalyst for a time and at a temperature sufficient to depolymerize the photopolymerization product.

The foregoing and other objects and aspects of the present invention are explained in greater detail in the drawings herein and the specification set forth below.

### Brief Description of the Drawings

**FIG. 1** is a schematic illustration of one example of an apparatus as described herein.
**FIG. 2** schematically illustrates an inert gas (in this instance, nitrogen) exchanging with oxygen in a resin through the window of the apparatus of **FIG. 1**.
**FIG. 3** is a photograph of a set of test objects produced on a carrier platform, with significant number of the objects failing to print accurately, or failing to complete their print.
**FIG. 4A** schematically illustrates lateral diffusion of free radicals from a growing object, as part of a non-limiting theory for the failures shown in **FIG. 3****.**
**FIG. 4B** schematically illustrates lateral formation of an unintended polymerized "skirt" around the object, which may be a consequence of the lateral diffusion of free radicals shown in **FIG. 4A****.**
**FIG. 5** is a schematic illustration of another example of an apparatus as described herein.
**FIG. 6** is a schematic illustration of another example of an apparatus as described herein, which includes an enclosed chamber.

### Detailed Description of Illustrative Embodiments and Examples

The present invention is now described more fully hereinafter with reference to the accompanying drawings. These embodiments are provided so that this disclosure will be thorough and complete and will fully convey the scope of the invention, as defined by the claims, to those skilled in the art.

As used herein, the term "and/or" includes any and all possible combinations of one or more of the associated listed items, as well as the lack of combinations when interpreted in the alternative ("or").

Unless otherwise defined, all terms (including technical and scientific terms) used herein have the same meaning as commonly understood by one of ordinary skill in the art to which this invention belongs. It will be further understood that terms, such as those defined in commonly-used dictionaries, should be interpreted as having a meaning that is consistent with their meaning in the context of the specification and claims and should not be interpreted in an idealized or overly formal sense unless expressly so defined herein. Well-known functions or constructions may not be described in detail for brevity and/or clarity.

### 1. RESINS.

Polymerizable liquid compositions curable by actinic radiation (typically light, and in some embodiments ultraviolet (UV) light) are provided to enable the present invention. The liquid (sometimes referred to as "liquid resin," "ink," or simply "resin" herein) may include a polymerizable monomer, particularly photopolymerizable and/or free radical polymerizable monomers (*e.g*., cyclic olefin monomers and/or reactive diluents) and/or prepolymers (*i.e*., reacted or larger monomers capable of further polymerization), and a suitable catalyst such as a ring-opening metathesis polymerization (ROMP) photocatalyst.

Examples of suitable resins are set forth in O. Burtovyy, Polycycloolefin monomers and catalyst activated by compound cable of generating photoacid as optical materials, PCT Patent Application Publication No. WO2019/147878,.

Additional examples of suitable catalysts include, but are not limited to, catalysts set forth in Stijn Monsaert et al., Latent olefin metathesis catalysts, Chem Soc. Revie. 38, 3360 (2009) and Y. Vidavsky and N. Lemcoff, Light-induced olefin metathesis, Beilsein J. Org Chem. 6, 1106-1119 (2010).

Non-limiting examples of suitable cyclic olefin monomers include, but are not limited to, cyclopropene, cyclobutene, benzocyclobutene, cyclopentene, norbornene, norbornadiene, cycloheptene, cyclooctene, 7-oxanorbornene, 7-oxanorbornadiene, cyclodecene, 1,3-cyclooctadiene, 1,5-cyclooctadiene, 1,3-cycloheptadiene, [2.2.1]bicycloheptenes, [2.2.2]bicyclooctenes, ethylidene norbornene, dicyclopentadiene, vinyl norbornene, cyclohexenylnorbornenes, norbornene dicarboxylic anhydrides, cyclododecene, 1,5,9-cyclododecatriene (with these terms including derivatives of any of the foregoing), or a mixture of two or more thereof. Suitable examples include, but are not limited to, those set forth in US Patent Nos. 10,767,002; 10,693,072; 10,245,562; 9,765,180; 9,468,890; 9,415,354; 9,328,179; 9,181,360; 8,765,894; and 8,210,967.

In some embodiments, the ROMP photocatalyst is inhibited by oxygen. In some embodiments, the ROMP photocatalyst comprises a transition metal catalyst. In some embodiments, the ROMP photocatalyst comprises ruthenium, tungsten, or osmium.

***Diluents**.* Diluents as known in the art are compounds used to reduce viscosity in a resin composition, and may be light-reactive or non-reactive diluents. Reactive diluents undergo reaction to become part of the polymeric network during light cure. In some embodiments, the reactive diluent may react at approximately the same rate as other reactive monomers and/or prepolymers in the composition.

***Fillers**.* Any suitable filler may be used in connection with the present invention, depending on the properties desired in the part or object to be made. Thus, fillers may be solid or liquid, organic or inorganic, and may include reactive and non-reactive rubbers: siloxanes, acrylonitrile-butadiene rubbers; reactive and non-reactive thermoplastics (including but not limited to: poly(ether imides), maleimide-styrene terpolymers, polyarylates, polysulfones and polyethersulfones, etc.); inorganic fillers such as silicates (such as talc, clays, silica, mica), glass, carbon nanotubes, graphene, cellulose nanocrystals, etc., including combinations of all of the foregoing. Suitable fillers include tougheners, such as core-shell rubbers, as discussed below.

***Tougheners**.* One or more polymeric and/or inorganic tougheners can be used as a filler in the present invention. The toughener may be uniformly distributed in the form of particles in the cured product. The particles could be less than 5 microns (µm) in diameter. Such tougheners include, but are not limited to, those formed from elastomers, branched polymers, hyperbranched polymers, dendrimers, rubbery polymers, rubbery copolymers, block copolymers, core-shell particles, oxides or inorganic materials such as clay, polyhedral oligomeric silsesquioxanes (POSS), carbonaceous materials (*e.g*., carbon black, carbon nanotubes, carbon nanofibers, fullerenes), ceramics and silicon carbides, with or without surface modification or functionalization. Examples of block copolymers include the copolymers whose composition is described in U.S. Pat. No. 6,894,113 (Court et al., Atofina, 2005) and include "NANOSTRENTH^{®}" SBM (polystyrene-polybutadiene-polymethacrylate), and AMA (polymethacrylate-polybutylacrylate-polymethacrylate), both produced by Arkema (King of Prussia, Pennsylvania). Other suitable block copolymers include FORTEGRA^{®} and the amphiphilic block copolymers described in U.S. Pat. No. 7,820,760B2, assigned to Dow Chemical. Examples of known core-shell particles include the core-shell (dendrimer) particles whose compositions are described in US 2010/0280151 A1 (Nguyen et al., Toray Industries, Inc., 2010) for an amine branched polymer as a shell grafted to a core polymer polymerized from polymerizable monomers containing unsaturated carbon-carbon bonds, core-shell rubber particles whose compositions are described in EP 1632533 A1 and EP 2123711 A1 by Kaneka Corporation, and the "KaneAce MX" product line of such particle/epoxy blends whose particles have a polymeric core polymerized from polymerizable monomers such as butadiene, styrene, other unsaturated carbon-carbon bond monomer, or their combinations, and a polymeric shell compatible with the epoxy, typically polymethylmethacrylate, polyglycidylmethacrylate, polyacrylonitrile or similar polymers, as discussed further below. Also suitable as block copolymers in the present invention are the "JSR SX" series of carboxylated polystyrene/polydivinylbenzenes produced by JSR Corporation; "Kureha Paraloid" EXL-2655 (produced by Kureha Chemical Industry Co., Ltd.), which is a butadiene alkyl methacrylate styrene copolymer; "Stafiloid" AC-3355 and TR-2122 (both produced by Takeda Chemical Industries, Ltd.), each of which are acrylate methacrylate copolymers; and "PARALOID" EXL-2611 and EXL-3387 (both produced by Rohm & Haas), each of which are butyl acrylate methyl methacrylate copolymers. Examples of suitable oxide particles include NANOPOX^{®} produced by nanoresins AG. This is a master blend of functionalized nanosilica particles and an epoxy.

***Core-shell rubbers.*** Core-shell rubbers are particulate materials (particles) having a rubbery core. Such materials are known and described in, for example, US Patent Application Publication No. 2015/0184039, as well as US Patent Application Publication No. 2015/0240113, and US Patent Nos. 6,861,475, 7,625,977, 7,642,316, 8,088,245, and elsewhere.

In some embodiments, the core-shell rubber particles are nanoparticles (*i.e*., having an average particle size of less than 1000 nanometers (nm)). Generally, the average particle size of the core-shell rubber nanoparticles is less than 500 nm, e.g., less than 300 nm, less than 200 nm, less than 100 nm, or even less than 50 nm. Typically, such particles are spherical, so the particle size is the diameter; however, if the particles are not spherical, the particle size is defined as the longest dimension of the particle.

In some embodiments, the rubbery core can have a glass transition temperature (Tg) of less than -25 °C, more preferably less than -50 °C, and even more preferably less than -70 °C. The Tg of the rubbery core may be well below -100 °C. The core-shell rubber also has at least one shell portion that preferably has a Tg of at least 50 °C. By "core," it is meant an internal portion of the core-shell rubber. The core may form the center of the core-shell particle, or an internal shell or domain of the core-shell rubber. A shell is a portion of the core-shell rubber that is exterior to the rubbery core. The shell portion (or portions) typically forms the outermost portion of the core-shell rubber particle. The shell material can be grafted onto the core or is cross-linked. The rubbery core may constitute from 50 to 95%, or from 60 to 90%, of the weight of the core-shell rubber particle.

The core of the core-shell rubber may be a polymer or copolymer of a conjugated diene such as butadiene, or a lower alkyl acrylate such as n-butyl-, ethyl-, isobutyl- or 2-ethylhexylacrylate. The core polymer may in addition contain up to 20% by weight of other copolymerized mono-unsaturated monomers such as styrene, vinyl acetate, vinyl chloride, methyl methacrylate, and the like. The core polymer is optionally cross-linked. The core polymer optionally contains up to 5% of a copolymerized graft-linking monomer having two or more sites of unsaturation of unequal reactivity, such as diallyl maleate, monoallyl fumarate, allyl methacrylate, and the like, at least one of the reactive sites being nonconjugated.

The core polymer may also be a silicone rubber. These materials often have glass transition temperatures below -100 °C. Core-shell rubbers having a silicone rubber core include those commercially available from Wacker Chemie, Munich, Germany, under the trade name GENIOPERL^{®}.

The shell polymer, which is optionally chemically grafted or cross-linked to the rubber core, can be polymerized from at least one lower alkyl methacrylate such as methyl methacrylate, ethyl methacrylate or t-butyl methacrylate. Homopolymers of such methacrylate monomers can be used. Further, up to 40% by weight of the shell polymer can be formed from other monovinylidene monomers such as styrene, vinyl acetate, vinyl chloride, methyl acrylate, ethyl acrylate, butyl acrylate, and the like. The molecular weight of the grafted shell polymer can be between 20,000 and 500,000.

One suitable type of core-shell rubber has reactive groups in the shell polymer which can react with an epoxy resin or an epoxy resin hardener. Glycidyl groups are suitable. These can be provided by monomers such as glycidyl methacrylate.

One example of a suitable core-shell rubber is of the type described in US Patent Application Publication No. 2007/0027233 (EP 1632533 A1). Core-shell rubber particles as described therein include a cross-linked rubber core, in most cases being a cross-linked copolymer of butadiene, and a shell which is preferably a copolymer of styrene, methyl methacrylate, glycidyl methacrylate and optionally acrylonitrile. The core-shell rubber is preferably dispersed in a polymer or an epoxy resin, also as described in the document.

Suitable core-shell rubbers include, but are not limited to, those sold by Kaneka Corporation under the designation Kaneka Kane Ace, including the Kaneka Kane Ace 15 and 120 series of products, including Kaneka Kane Ace MX 120, Kaneka Kane Ace MX 153, Kaneka Kane Ace MX 154, Kaneka Kane Ace MX 156, Kaneka Kane Ace MX170, Kaneka Kane Ace MX 257 and Kaneka Kane Ace MX 120 core-shell rubber dispersions, and mixtures of two or more thereof.

***Additional resin ingredients.*** The liquid resin or polymerizable material can have solid particles suspended or dispersed therein. Any suitable solid particle can be used, depending upon the end product being fabricated. The particles can be metallic, organic/polymeric, inorganic, or composites or mixtures thereof. The particles can be nonconductive, semi-conductive, or conductive (including metallic and non-metallic or polymer conductors); and the particles can be magnetic, ferromagnetic, paramagnetic, or nonmagnetic. The particles can be of any suitable shape, including spherical, elliptical, cylindrical, etc. The particles can be of any suitable size (for example, ranging from 1 nm to 20 µm average diameter).

The particles can comprise an active agent or detectable compound as described below, though these may also be provided dissolved or solubilized in the liquid resin as also discussed below. For example, magnetic or paramagnetic particles or nanoparticles can be employed.

The liquid resin can have additional ingredients solubilized therein, including pigments, dyes, active compounds or pharmaceutical compounds, detectable compounds (*e.g*., fluorescent, phosphorescent, radioactive), etc., again depending upon the particular purpose of the product being fabricated. Examples of such additional ingredients include, but are not limited to, proteins, peptides, nucleic acids (DNA, RNA) such as siRNA, sugars, small organic compounds (drugs and drug-like compounds), etc., including combinations thereof.

***Photoabsorbers.*** In some embodiments, polymerizable liquids for carrying out the present invention include a non-reactive pigment or dye that absorbs light, particularly UV light. Suitable examples of such light absorbers include, but are not limited to: *(i)* titanium dioxide (*e.g.,* included in an amount of from 0.05 or 0.1 to 1 or 5 percent by weight), *(ii)* carbon black (*e.g*., included in an amount of from 0.05 or 0.1 to 1 or 5 percent by weight), and/or *(iii)* an organic ultraviolet light absorber such as a hydroxybenzophenone, hydroxyphenylbenzotriazole, oxanilide, benzophenone, thioxanthone, hydroxyphenyltriazine, and/or benzotriazole ultraviolet light absorber (*e.g.,* Mayzo BLS1326) (*e.g.,* included in an amount of 0.001 or 0.005 to 1, 2 or 4 percent by weight). Examples of suitable organic ultraviolet light absorbers include, but are not limited to, those described in US Patent Nos. 3,213,058; 6,916,867; 7,157,586; and 7,695,643.

***Flame retardants.*** Flame retardants that may be included in the polymerizable liquids of the present invention may include monomers or prepolymers that include flame retardant group(s). For example, in some embodiments the constituents may be brominated, i.e., contain one, two, three, four or more bromine groups covalently coupled thereto (*e.g.,* with total bromine groups in an amount of from 1, 2, or 5% to 15 or 20% by weight of the polymerizable liquid). Flame retardant oligomers, which may be reactive or non-reactive, may also be included in the resins of the present invention. Examples include, but are not limited to, brominated oligomers such as ICL Flame Retardant F-3100, F-3020, F-2400, F-2016, etc. (ICL Industrial Products). *See also* U.S. 2013/0032375 to Pierre et al. Flame retardant synergists, which when combined with halogens such as bromine synergize flame retardant properties, may also be included. Examples include, but are not limited to, antimony synergists such as antimony oxides (*e.g*., antimony trioxide, antimony pentaoxide, etc.), aromatic amines such as melamine, etc. See US Patent No. 9,782,947. In some embodiments, the resin composition may contain synergists in an amount of from 0.1, 0.5 or 1% to 3, 4, or 5% by weight. In some embodiments, an antimony pentoxide functionalized with triethanolamine or ethoxylated amine may be used, which is available as BurnEX^{®} colloidal additives such as BurnEX^{®} A1582, BurnEX^{®} ADP480, and BurnEX^{®} ADP494 (Nyacol^{®} Nano Technologies, Ashland, Massachussetts).

***Matting agents.*** Examples of suitable matting agents include, but are not limited to, barium sulfate, magnesium silicate, silicon dioxide, an alumino silicate, an alkali alumino silicate ceramic microspheres, alumino silicate glass microspheres or flakes, polymeric wax additives (such as polyolefin waxes in combination with the salt of an organic anion), etc., including combinations thereof.

***Latent thermal catalysts.*** In some embodiments, the resin further includes a latent thermal ROMP catalyst, and the method further comprises heating the object after forming thereof to further polymerize the resin. Numerous examples of such catalysts are known, including but not limited to those described in US Patent No. 6,107,420 to Grubbs and Wilhelm and US Patent No. 9,610,572 to Grela and Czarnocki.

### 2. APPARATUS.

Apparatus for carrying out the methods described herein may be adapted from apparatus used to carry out continuous liquid interface production (CLIP), by replacing the oxygen or enriched oxygen supply, with an inert gas supply. CLIP is known and described in, for example, US Patent Nos. 9,211,678; 9,205,601; 9,216,546; in Feller and Griffin, PCT Patent Application Pub. No. WO 2019/084112, and in Feller et al., PCT Patent Application Pub. No. WO 2018/006018.

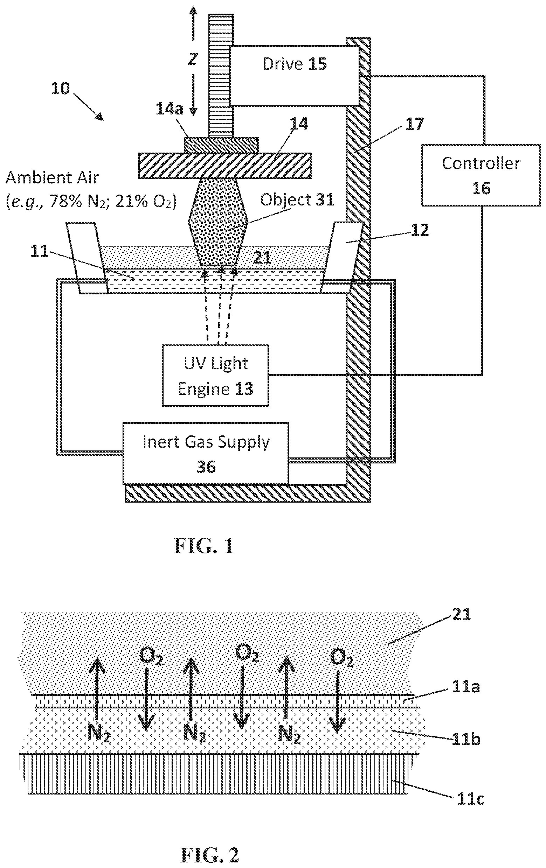

A non-limiting example of an apparatus is given in **FIG. 1****.** The apparatus **(10)** typically includes a frame or chassis **(17)**, a resin cassette (window **(11)** + frame **(12)**) operatively associated with said frame (typically by means of a cassette mount, not shown); a light source **(*e.g.,* 13)** positioned below the resin cassette and positioned for projecting an enlarged image through said window **(11)**; a removable carrier platform **(14)** on which an object **(31)** can be produced from the resin **(21)**, and/or a carrier platform engagement assembly **(14a)** on which the carrier platform can be mounted, positioned above the window **(11)** and operatively associated with the frame **(17)**; and drive **(15)** operatively associated with said carrier and said frame and configured for advancing said carrier platform and said resin cassette away from one another (typically in the "Z" or vertical direction, and typically by moving the platform upward and away from an otherwise stationary window).

Any suitable light source can be used, such as one employing an ultraviolet light, projecting off of a micromirror array or through a liquid crystal display (LCD) panel.

Any suitable inert gas supply **(36)** can be used, including a tank or bottle of compressed inert gas or gas blend, a nitrogen generator, etc. Examples of suitable inert gasses include nitrogen, argon, helium, neon, krypton, xenon, radon, or a combination of two or more thereof (*e.g.,* at a purity of 95 percent, 99 percent, or 99.9 percent or more). The inert gas supply may include a return line (as shown), and/or valves and channels for reciprocal flow of the inert gas through the window may be provided, and/or the inert gas may simply be vented after use.

In some embodiments, the inert gas may be provided dissolved in a liquid carrier.

The apparatus may include a controller **(16)**, such as a general purpose computer, located on board the apparatus, on the cloud, or a combination thereof, operatively associated with the light source and drive, and including programming for carrying out additive manufacturing on the apparatus as is known in the art.

The apparatus can optionally include heaters and/or coolers operatively associated with the window and the controller. Any suitable devices can be used, including resistive heaters, Peltier coolers, infrared heaters, etc., including combinations thereof. The heaters/coolers are preferably directly included in the resin cassette, preferably in direct contact with the window itself, or in the case of infrared heaters can be positioned to project into the resin through the window. Alternatively or in addition, the heaters and/or coolers may be in direct contact with inert gas supply such as a liquid carrier thereof.

The cassette, as noted above, generally includes a light transmissive window **(11)** configured to pass an image therethrough, the window having internal structures defining fluid flow passages therein, with the internal structures distributed across the length and width of said window, and optionally with the internal structures creating reflective and refractive surfaces within said window; and a circumferential frame **(12)** connected to and surrounding said window, said window and frame together forming a well configured to receive a light polymerizable resin **(*e.g.*, 21).** A variety of geometries for these internal structures can be employed. In some embodiments, internal structures comprise walls and the passages comprise laterally aligned (*e.g*., parallel) channels; in some embodiments the internal structures comprise pillars (of any shape, width, and length) and the passages may comprise regularly or irregularly intersecting channels. The channels themselves may be of any suitable profile, such triangular and/or quadrangular (*e.g*., square, rectangular, parallelogram, etc.) in profile. *See, e.g.,* US 2016/0200052 and US 2018/0133959 to Moore et al.

The cassette window can be constructed in any suitable manner, though preferably provides or includes a gas permeable member through which inert gas in fluid flow passages can pass through to resin on top of the window, and oxygen in the resin can flow in the opposite direction from the resin, through the window, and into the channels carrying the inert gas. The oxygen may exit the cassette through a return line and/or a vent.

In some embodiments, and as schematically shown in **FIG. 2****,** the window comprises a sandwich of at least a gas permeable top portion or member **(11a)** an intermediate portion or member **(11b),** and a bottom portion or member **(11c)**, with the internal structures formed in the intermediate portion or member.

In some embodiments, the window bottom portion or member **(11c)** is rigid and may comprise glass, sapphire, quartz, or transparent aluminum (ALON, aluminum oxynitride).

In some embodiments, the gas permeable window top portion or member **(11a)** comprises a polymer (*e.g*., an oxygen-permeable polymer such as an amorphous fluoropolymer).

In some embodiments, the intermediate portion or member **(11b)** comprises a second polymer layer, such as a polydimethylsiloxane (PDMS) layer.

In some embodiments, the channels may be formed in the intermediate portion or member **(11b)** in fluid communication with the gas supply **(36)** so that inert gas (*e.g.,* nitrogen) flows from the channels of the intermediate portion or member **(11b)** through the gas permeable top portion or member **(11a)**, with oxygen flowing in an opposite direction, as shown in **FIG. 2****.**

### 3. METHODS OF MAKING.

Suitable techniques used for additive manufacturing include bottom-up and top-down additive manufacturing, generally known as stereolithography. Such methods are known and described in, for example, U.S. Patent No. 5,236,637 to Hull, US Patent Nos. 5,391,072 and 5,529,473 to Lawton, U.S. Patent No. 7,438,846 to John, US Patent No. 7,892,474 to Shkolnik, U.S. Patent No. 8,110,135 to El-Siblani, U.S. Patent Application Publication No. 2013/0292862 to Joyce, and US Patent Application Publication No. 2013/0295212 to Chen et al. *See also* US Patent Nos. 9,211,678; 9,205,601; and 9,216,546 to DeSimone et al. As noted above, the apparatus which may be used in some embodiments preferably includes an inert gas (including inert gas with low levels of oxygen) supply, which can be conveniently implemented by replacing the oxygen or enriched oxygen supply generally provided with a CLIP apparatus, with an inert gas supply. Note particularly Feller and Griffin, PCT Patent Application Pub. No. WO 2019/084112, and Feller et al., PCT Patent Application Pub. No. WO 2018/006018, cited above (*see also* G. Price and B. Feller, Window Cassettes for reduced polymerization inhibitor irregularity during additive manufacturing, US Patent App. Publ. No. 2020/0061919 (Feb. 27, 2020), and B. Feller and G. Price, Reduction of polymerization inhibitor irregularity on additive manufacturing windows, US Patent App. Pub. No. 2020/0094468 (Mar. 26, 2020)).

A method of making a three-dimensional object by bottom-up additive manufacturing as taught herein includes: providing a carrier platform, a light source, and a light transmissive window therebetween, the light transmissive window comprising a gas permeable member having a top surface and a bottom surface; depositing a liquid resin on the window, the resin comprising a cyclic olefin monomer and a ring-opening metathesis polymerization (ROMP) photocatalyst; contacting an inert gas to said gas permeable member bottom surface; and exposing said resin to light from said light source while advancing said carrier platform away from said window to form said three-dimensional object on said carrier platform.

According to the invention, the activation of said ROMP photocatalyst for the polymerization of said cyclic olefin monomer is inhibited by oxygen, and the liquid resin deposited on said window may be in contact with ambient oxygen. In the method, inert gas is contacted to the gas permeable member bottom surface in an amount sufficient to deplete said resin of residual oxygen therein, and/or ambient oxygen absorbed therein.

### 4. REDUCTION OF FAILURE RATE BY INTRODUCING LOW LEVELS OF OXYGEN.

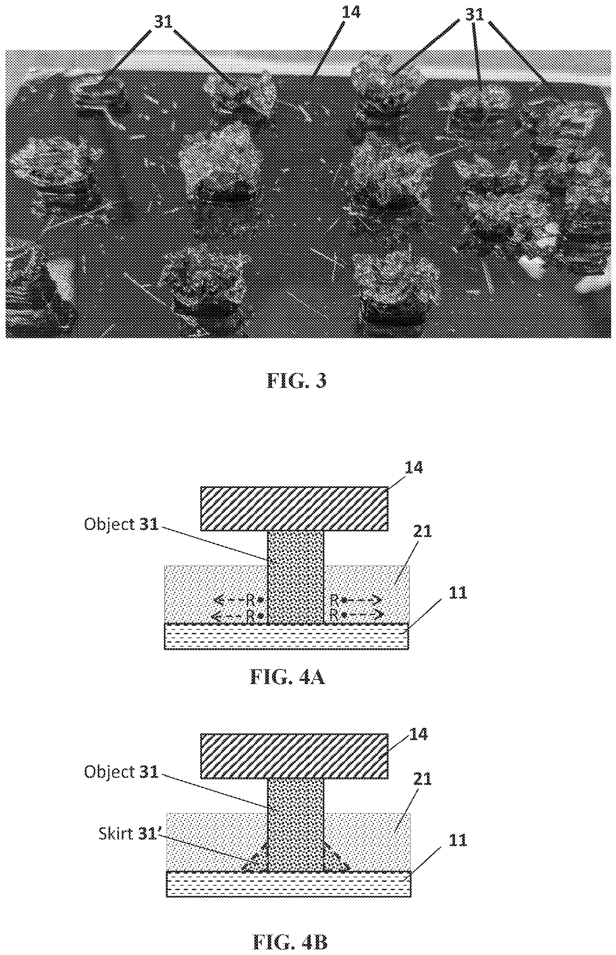

While success with carrying out the present invention with the resin pool open to the atmosphere was surprising, it was nevertheless observed that significant print failures occurred in some efforts to carry out the methods. Examples of such failed prints are shown in the photograph given as **FIG. 3**.

| **TABLE 1: COMPARISON OF FREE RADICAL AND PHOTOACTIVATED ROMP POLYMERIZATION MECHANISMS** | | |
|---|---|---|
| | **Radical Polymerization** | **Photoactivated ROMP** |
| **Initiation in "dead zone?"** | **NO:** Photoinitiator radicals react with O₂ | **NO:** Photoactivator radicals react with O₂ preventing activation of catalyst |
| **Chain growth in dead zone?** | **NO:** Growing polymer chains terminated by O₂ | **YES:** Growing polymer chain not terminated by O₂ |
| **NOTE:** Unlike radical polymerization, PROMP cannot consume oxygen by reaction with excess photoinitiator radicals due to low concentration of photoactivator and catalyst. | | |

Without wishing to be bound to any theory for explaining such failures, it is currently believed-as summarized in **FIGS. 4A to 4B**-that excess photogenerated radicals (or HCl) diffuse into the unilluminated regions around growing objects, due to the lack of a chain growth termination mechanism noted in **Table 1** above. This then results in initiation around the growing objects, leading to the generation of a sticky, gel-like material adhered to the object that, in turn, blocks resin refill beneath the growing objects and promotes undesired adhesion to the window.

A series of experiments were conducted with the inclusion of a small amount of oxygen in the inert gas in an effort to reduce this stray cure (skirt formation or "flaring"), and reduce the failure rate, the results of which are summarized in **Table 2** below. An entirely inert (nitrogen gas) environment, both above and below the resin pool, resulted in a high failure rate such as seen in **FIG. 3****,** and a partially inert environment, where ambient air was admitted into the build chamber above the resin pool, but an inert gas provided in the channels beneath the window, likewise led to a high rate of print failures as seen in **FIG. 3****.** And as expected, a typical environment, in which air is admitted above the window, and an enriched oxygen atmosphere fed into the cassette and through the window, failed to print. However, it was found that introduction of a small amount of oxygen through the window resulted in successful print.

In **Table 2** below, the percent of oxygen refers to relative partial pressure. Current embodiment of printers from Carbon Inc. implementing CLIP supply the window cassette pure oxygen at a reduced pressure of 25 kilopascals (kPa). Hence, the concentration, or partial pressure, of the oxygen is 25% relative to pure oxygen gas at standard temperature and pressure (STP: zero degrees Centigrade, and 100 kPa).

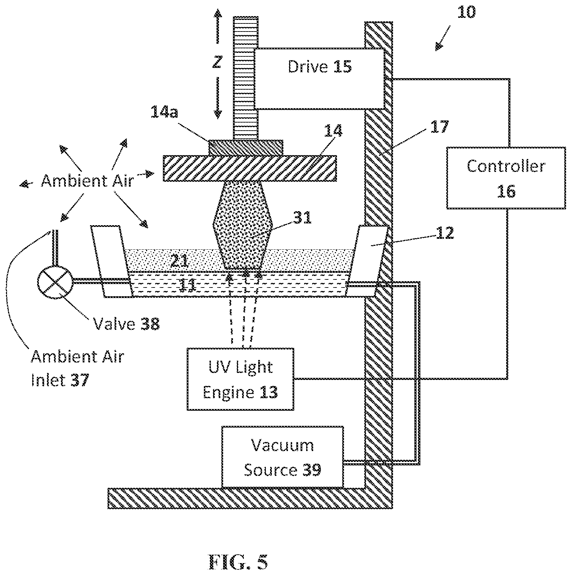

In a preferred embodiment, and as summarized in **FIG. 5** discussed below, the low oxygen supply to the window cassette is achieved by disconnecting the oxygen generator, and feeding ambient air into the window, but at a pressure of 12 kPa. Given that ambient air is comprised of approximately 21% oxygen and 79% nitrogen at 100 kPa (1 atm), then the oxygen supply to the window cassette (for feeding through the semipermeable member into the resin) is approximately 2.5% oxygen (along with 9.5% nitrogen) relative to the oxygen (and the nitrogen) in the ambient air and air inlet stream, at STP.

| **TABLE 2: COMPARISON OF PHOTOACTIVATED ROMP UNDER DIFFERENT OPERATING CONDITIONS** | | | | |
|---|---|---|---|---|
| | **I** | **II** | **III** | **IV** |
| **Chamber condition:** | Air | Air | Air | Inert |
| **Casette condition:** | ≥11% O₂ | 11%>O₂>2.5% | Inert | Inert |
| **Result:** | No print | **Reduced failure rate** | High failure rate | High failure rate |
| **Notes:** | Too much O₂ | **Preferred O₂ range** | Insufficient O₂ | Insufficient O₂ |

A gas or atmosphere having oxygen level of 2.5% in the context described above can be more generally described as gas (including gas mixtures, such as air at a reduced pressure) having a partial pressure of oxygen of 0.1, 0.2, 0.4, 1, 2, or 2.5 kilopascals (kPa), up to 8, 9, 10, or 11 kPa.

Note that the preferred oxygen concentration beneath the window (for feeding through the semipermeable member) will depend on factors such as the size of the objects being made, the accuracy required for the objects being made, the speed of production desired, and combinations thereof. While air is a convenient source as noted above and below, compressed gasses, ranging from pure oxygen (fed into the window cassette with a high vacuum (*i*.*e*., very low pressure)) to mixed gasses (including combinations of oxygen with inert gasses), and combinations of oxygen and/or nitrogen generators may be used. Temperatures may vary depending on the need to heat, and/or cool, the window. Those skilled in the art can adjust parameters such as pressure, concentrations, and temperature based on their specific circumstances and the objects being made.

An example apparatus for carrying out these embodiments is schematically illustrated in **FIG. 5**, with control lines (such as for valves, drives, pumps, and light sources) omitted for clarity. Like elements to **FIG. 1** are given like numbers in **FIG. 5****.** As shown in **FIG. 5** and discussed above, the inert gas supply **36** is now replaced with an ambient air inlet **37**, a valve **38** (e.g., for limiting air intake and maintaining the desired vacuum), and a vacuum source **39** such as a diaphragm pump (though the inert gas supply may in some embodiments include a vacuum source). Advanced features such as flow switching of the gas supplied into the window cassette can be implemented, if desired, in like manner as described in G. Price and B. Feller, Window Cassettes for reduced polymerization inhibitor irregularity during additive manufacturing, US Patent App. Publ. No. 2020/0061919 (Feb 27, 2020), and in B. Feller and G. Price, Reduction of polymerization inhibitor irregularity on additive manufacturing windows, US Patent App. Pub. No. 2020/0094468 (Mar. 26, 2020. Those skilled in the art will appreciate, however, that the partial pressures of oxygen desired can be achieved by a variety of means, including by the provision of oxygen, and gas mixtures including oxygen (*e.g.,* from oxygen generators, gas tanks, nitrogen generators, and combinations thereof), at reduced pressures, or even elevated pressures, depending on the amount of oxygen in the gas mixture.

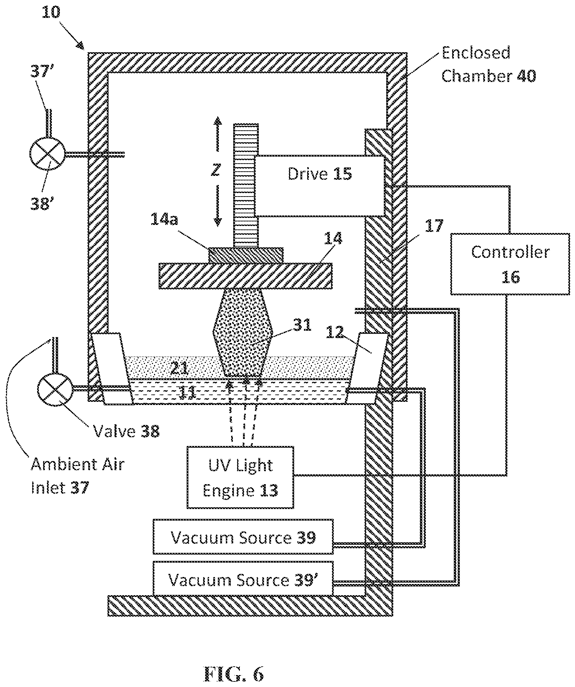

In some embodiments, it is preferred to produce the object in an enclosed chamber so that the resin on top of the window can be in contact with a controlled atmosphere: Specifically, a gas or gas mixture having substantially the same partial pressure of oxygen as provided into the window cassette (*e.g.,* a partial pressure of oxygen in the chamber, plus or minus 10 or 20 percent, the partial pressure of oxygen supplied into the window cassette). A non-limiting example of such an apparatus is given in **FIG. 6****,** which is similar to the embodiment of **FIG. 5****,** but now with the addition of an enclosed chamber **40,** an ambient air inlet **37'**, control valve **38'**, and vacuum source **39'** to provide low levels of oxygen into the chamber, as described above.

### 5. METHODS OF RECYCLING.

The resulting additively manufactured object comprised of the photopolymerization product of cyclic olefin monomer may be recycled by contacting the object to a liquid acrylate (*e.g*., acrylic acid, ethyl acrylate) in the presence of a Grubbs catalyst for a time and at a temperature sufficient to depolymerize the photopolymerization product. In some embodiments, the objection may be comminuted (*e.g*., by grinding, shredding, chopping, or pelletizing), and the contacting carried out on the comminuted object.

The foregoing is illustrative of the present invention, and is not to be construed as limiting thereof. The invention is defined by the following claims.

## Claims

1. A method of making a three-dimensional object (31) by bottom-up additive manufacturing, comprising:
(a) providing a carrier platform (14), a light source (13), and a light transmissive window (11) therebetween, the light transmissive window (11) comprising a gas permeable member (11a) having a top surface and a bottom surface;
(b) depositing a liquid resin (21) on the window (11), the resin (21) comprising a cyclic olefin monomer and a ring-opening metathesis polymerization, ROMP, photocatalyst;
(c) contacting a gas comprising oxygen to said gas permeable member (11a) bottom surface, wherein said gas includes oxygen at a partial pressure in a range of 0.1 to 11 kilopascals; and
(d) exposing said resin (21) to light from said light source (13) while advancing said carrier platform (14) away from said window (11) to form said three-dimensional object (31) on said carrier platform (14).

2. The method of claim 1, wherein said resin (21) on said window (11) is:
(i) in contact with ambient air: it is in a chamber open to ambient air and/or in contact with ambient air; or
(ii) in contact with a second gas, the gas including oxygen at a partial pressure substantially the same as said gas contacting said gas permeable member (11a) bottom surface.

3. The method of claim 1 or 2, wherein a liquid interface is maintained between said object (31) and said window (11) by said resin (21) during step (d).

4. The method of any preceding claim, wherein said gas further comprises an inert gas selected from the group consisting of nitrogen, argon, helium, neon, krypton, xenon, radon, and a combination of two or more thereof.

5. The method of claim 4, wherein said gas further comprises argon.

6. The method of any preceding claim, wherein said gas is dissolved in a liquid carrier.

7. The method of any preceding claim, wherein the cyclic olefin monomer is selected from the group consisting of cyclopropene, cyclobutene, benzocyclobutene, cyclopentene, norbornene, norbornadiene, cycloheptene, cyclooctene, 7-oxanorbornene, 7-oxanorbornadiene, cyclodecene, 1,3-cyclooctadiene, 1,5-cyclooctadiene, 1,3-cycloheptadiene, [2.2.1]bicycloheptenes, [2.2.2]bicyclooctenes, ethylidene norbornene, dicyclopentadiene, vinyl norbornene, cyclohexenylnorbornenes, norbornene dicarboxylic anhydrides, cyclododecene, 1,5,9-cyclododecatriene, and a mixture of two or more thereof.

8. The method of any preceding claim, wherein said ROMP photocatalyst comprises a transition metal catalyst.

9. The method of any preceding claim, wherein said ROMP photocatalyst comprises ruthenium, tungsten, or osmium.

10. The method of any preceding claim, wherein said resin further comprises at least one additional constituent selected from the group consisting of photoabsorbers, pigments, dyes, matting agents, flame-retardants, fillers, non-reactive and light-reactive diluents, and combinations of two or more thereof.

11. The method of any preceding claim, wherein said resin further comprises a latent thermal ROMP catalyst, and said method further comprises heating said object (31) after forming thereof to further polymerize said resin.

12. The method of any one of claims 1-11, wherein said oxygen is included in said gas at a partial pressure of from 2.5 to 8 kilopascals.

## Patentansprüche

1. Verfahren zum Herstellen eines dreidimensionalen Objekts (31) durch additive Fertigung nach dem "Bottom-up"-Prinzip, Folgendes umfassend:
(a) Bereitstellen einer Trägerplattform (14), einer Lichtquelle (13) und eines lichtdurchlässigen Fensters (11) dazwischen, wobei das lichtdurchlässige Fernster (11) ein gasdurchlässiges Element (11a) mit einer Oberseite und einer Unterseite umfasst;
(b) Abscheiden eines flüssigen Harzes (21) auf das Fenster (11), wobei das Harz (21) ein zyklisches Olefinmonomer und einen Fotokatalysator einer ringöffnenden Metathesepolymerisation, ROMP, umfasst;
(c) In-Kontakt-Bringen eines Gases, das Sauerstoff umfasst, mit der Unterseite des gasdurchlässigen Elements (11a), wobei das Gas Sauerstoff bei einem Teildruck in einem Bereich von 0,1 bis 11 Kilopascal einschließt; und
(d) Aussetzen des Harzes (21) einem Licht von der Lichtquelle (13), während die Trägerplattform (14) von dem Fenster (11) wegbewegt wird, um das dreidimensionale Objekt (31) auf der Trägerplattform (14) zu bilden.

2. Verfahren nach Anspruch 1, wobei das Harz (21) auf dem Fenster (11):
(i) in Kontakt mit Umgebungsluft steht: es befindet sich in einer Kammer, die für Umgebungsluft offen ist und/oder in Kontakt mit Umgebungsluft steht; oder
(ii) in Kontakt mit einem zweiten Gas steht, wobei das Gas Sauerstoff bei einem Teildruck einschließt, der im Wesentlichen gleich dem Gas ist, das mit der Unterseite des gasdurchlässigen Elements (11a) in Kontakt steht.

3. Verfahren nach Anspruch 1 oder 2, wobei in Schritt (d) zwischen dem Objekt (31) und dem Fenster (11) durch das Harz (21) eine flüssige Grenzfläche aufrechterhalten wird.

4. Verfahren nach einem vorhergehenden Anspruch, wobei das Gas ferner ein inertes Gas umfasst, das aus der Gruppe ausgewählt ist, die aus Stickstoff, Argon, Helium, Neon, Krypton, Xenon, Radon und einer Kombination aus zwei oder mehr davon besteht.

5. Verfahren nach Anspruch 4, wobei das Gas ferner Argon umfasst.

6. Verfahren nach einem vorhergehenden Anspruch, wobei das Gas in einem flüssigen Träger gelöst ist.

7. Verfahren nach einem vorhergehenden Anspruch, wobei das zyklische Olefinmonomer aus der Gruppe ausgewählt ist, die aus Cyclopropen, Cyclobuten, Benzocyclobuten, Cyclopenten, Norbornen, Norbornadien, Cyclohepten, Cycloocten, 7-Oxanorbornen, 7-Oxanorbornadien, Cyclodecen, 1,3-Cyclooctadien, 1,5-Cyclooctadien, 1,3-Cycloheptadien, [2.2.1]Bicycloheptenen, [2.2.2]Bicyclooctenen, Ethylidennorbornen, Dicyclopentadien, Vinylnorbornen, Cyclohexenylnorbornenen, Norbornendicarboxylsäureanhydriden, Cyclododecen, 1,5,9-Cyclododecatrien und einer Mischung aus zwei oder mehr davon besteht.

8. Verfahren nach einem vorhergehenden Anspruch, wobei der ROMP-Fotokatalysator einen Übergangsmetallkatalysator umfasst.

9. Verfahren nach einem vorhergehenden Anspruch, wobei der ROMP-Fotokatalysator Ruthenium, Wolfram oder Osmium umfasst.

10. Verfahren nach einem vorhergehenden Anspruch, wobei das Harz ferner mindestens einen zusätzlichen Bestandteil umfasst, der aus der Gruppe ausgewählt ist, die aus Fotoabsorbern, Pigmenten, Farbstoffen, Mattierungsmitteln, Flammhemmern, Füllstoffen, nicht-reaktiven und lichtreaktiven Lösemitteln und Kombinationen aus zwei oder mehr davon besteht.

11. Verfahren nach einem vorhergehenden Anspruch, wobei das Harz ferner einen latenten thermischen ROMP-Katalysator umfasst, und das Verfahren ferner das Erwärmen des Objekts (31) nach dessen Bilden umfasst, um das Harz weiter zu polymerisieren.

12. Verfahren nach einem der Ansprüche 1 bis 11, wobei der Sauerstoff bei einem Teildruck von 2,5 bis 8 Kilopascal in dem Gas eingeschlossen ist.

## Revendications

1. Procédé de fabrication d'un objet tridimensionnel (31) par fabrication additive de bas en haut, comprenant :
(a) la fourniture d'une plateforme de support (14), d'une source de lumière (13) et d'une fenêtre de transmission de lumière (11) entre celles-ci, la fenêtre de transmission de lumière (11) comprenant un élément perméable au gaz (11a) comportant une surface supérieure et une surface inférieure ;
(b) la déposition d'une résine liquide (21) sur la fenêtre (11), la résine (21) comprenant un monomère d'oléfine cyclique et un photocatalyseur de polymérisation par ouverture de cycle par métathèse, ROMP ;
(c) la mise en contact d'un gaz comprenant de l'oxygène avec ladite surface inférieure de l'élément perméable au gaz (11a), dans lequel ledit gaz inclut de l'oxygène à une pression partielle dans une plage allant de 0,1 à 11 kilopascals ; et
(d) l'exposition de ladite résine (21) à la lumière émanant de ladite source de lumière (13) tout en faisant avancer ladite plateforme de support (14) à distance de ladite fenêtre (11) pour former ledit objet tridimensionnel (31) sur ladite plateforme de support (14).

2. Procédé selon la revendication 1, dans lequel ladite résine (21) sur ladite fenêtre (11) est :
(i) en contact avec l'air ambiant : elle se trouve dans une chambre ouverte à l'air ambiant et/ou en contact avec l'air ambiant ; ou
(ii) en contact avec un deuxième gaz, le gaz incluant de l'oxygène à une pression partielle sensiblement identique audit gaz étant en contact avec ladite surface inférieure de l'élément perméable au gaz (11a).

3. Procédé selon la revendication 1 ou 2, dans lequel une interface liquide est maintenue entre ledit objet (31) et ladite fenêtre (11) par ladite résine (21) durant l'étape (d).

4. Procédé selon l'une quelconque des revendications précédentes, dans lequel ledit gaz comprend en outre un gaz inerte sélectionné dans le groupe constitué de l'azote, l'argon, l'hélium, le néon, le krypton, le xénon, le radon, et d'une combinaison de deux ou plus de ceux-ci.

5. Procédé selon la revendication 4, dans lequel ledit gaz comprend en outre de l'argon.

6. Procédé selon l'une quelconque des revendications précédentes, dans lequel ledit gaz est dissous dans un support liquide.

7. Procédé selon l'une quelconque des revendications précédentes, dans lequel le monomère d'oléfine cyclique est sélectionné dans le groupe constitué du cyclopropène, du cyclobutène, du benzocyclobutène, du cyclopentène, du norbornène, du norbornadiène, du cycloheptène, du cyclooctène, du 7-oxanorbornène, du 7-oxanorbornadiène, du cyclodécène, du 1,3-cyclooctadiène, du 1,5-cyclooctadiène, du 1,3-cycloheptadiène, de [2.2.1]bicycloheptènes, de [2.2.2]bicyclooctènes, de l'éthylidène norbornène, du dicyclopentadiène, du vinyl norbornène, de cyclohexénylnorbornènes, d'anhydrides dicarboxyliques de norbornène, du cyclododécène, du 1,5,9-cyclododécatriène et d'un mélange de deux ou plus de ceux-ci.

8. Procédé selon l'une quelconque des revendications précédentes, dans lequel ledit photocatalyseur de ROMP comprend un catalyseur de métal de transition.

9. Procédé selon l'une quelconque des revendications précédentes, dans lequel ledit photocatalyseur de ROMP comprend du ruthénium, du tungstène ou de l'osmium.

10. Procédé selon l'une quelconque des revendications précédentes, dans lequel ladite résine comprend en outre au moins un constituant supplémentaire sélectionné dans le groupe constitué de photoabsorbeurs, de pigments, de colorants, d'agents de matage, de retardateurs de flamme, de charges, de diluants non réactifs et réactifs à la lumière, et de combinaisons de deux ou plus de ceux-ci.

11. Procédé selon l'une quelconque des revendications précédentes, dans lequel ladite résine comprend en outre un catalyseur thermique latent de ROMP, et ledit procédé comprend en outre le chauffage dudit objet (31) après la formation de celui-ci pour polymériser davantage ladite résine.

12. Procédé selon l'une quelconque des revendications 1 à 11, dans lequel ledit oxygène est inclus dans ledit gaz à une pression partielle de 2,5 à 8 kilopascals.
